# EUROPEAN PATENT APPLICATION

(11) **EP 3 147 145 A1**
(43) Date of publication of application: **29.03.2017**
(21) Application number: 16186885.6
(22) Date of filing: 01.09.2016
(51) Int. Cl.: B60H 1/00, F16K 1/20

(54) **DOOR FOR AIR CONDITIONER**

(30) Priority: 24.09.2015 JP 2015186419
(71) Applicant: Valeo Japan Co., Ltd., Saitama 360-0193 (JP)
(72) Inventor: SUZUKI, Yukio, SAITAMA, 360-0193 (JP); MURASE, Masayuki, SAITAMA, 360-0193 (JP); HAYASHI, Naoto, SAITAMA, 360-0193 (JP)
(74) Representative: Metz, Gaëlle

(57) **Abstract**

In a door for an air conditioner provided with a pair of seal lips, an abutting force of the door is equalized whichever seal lip abuts on the seat portion first, and flexibility of the seal lips is secured, and further, noise occurring due to air passing between an inner wall of a case and the seal lips can be reduced. A seal structure provided in a door body of a door for an air conditioner is configured by including a pair of seal lips provided along an axial direction or a radial direction of a rotary shaft and protruding toward the outside of the door body, and an auxiliary lip provided between the pair of seal lips and protruding toward the outside of the door body, in which a tip end portion of the auxiliary lip is extended farther from a virtual line connecting respective tip end portions of the pair of seal lips and angles made by the auxiliary lip and the respective seal lips are equalized, and a protruding amount of the auxiliary lip is set so that the auxiliary lip does not contact an inner wall of the case.

## Description

### BACKGROUND OF THE INVENTION

### 1. FIELD OF THE INVENTION

The present invention relates to a door for an air conditioner which changes the flow of air in an air passage in a case of the air conditioner or opens/closes an opening formed in the case, which is suitable to be applied to an air-mix door adjusting a mixing ratio between warm air and cool air, an intake door switching an intake mode, a mode door switching a blowout mode and so on.

### 2. BACKGROUND ART

In a vehicle air conditioner, a door (door for an air conditioner) for changing the flow of air in the air passage in the case or opens/closes the opening formed in the case is installed, which controls the temperature of air blowing out from the case, a blowout port of air and so on.

In a portion corresponding to a seat portion provided in the case around a door body of the door, there is provided a pair of seal lips made of an elastic material which is elastically deformed by being pressed onto the seat portion to block between the door body and the seat portion for positively shutting off the flow of air and reducing abutting noise occurring when abutting on the seat portion.

However, when the pair of seal lips are provided, noise (wind noise) may occur due to air passing between an inner wall of the case and the seal lips in the case where the door is separated from the seat portion of the case and moves inside the air passage, particularly in the case where an aperture of the opening of the door is small and wind velocity is relatively high. Accordingly, a structure disclosed in JP-A-2008-6877 (Patent Document 1) is proposed.

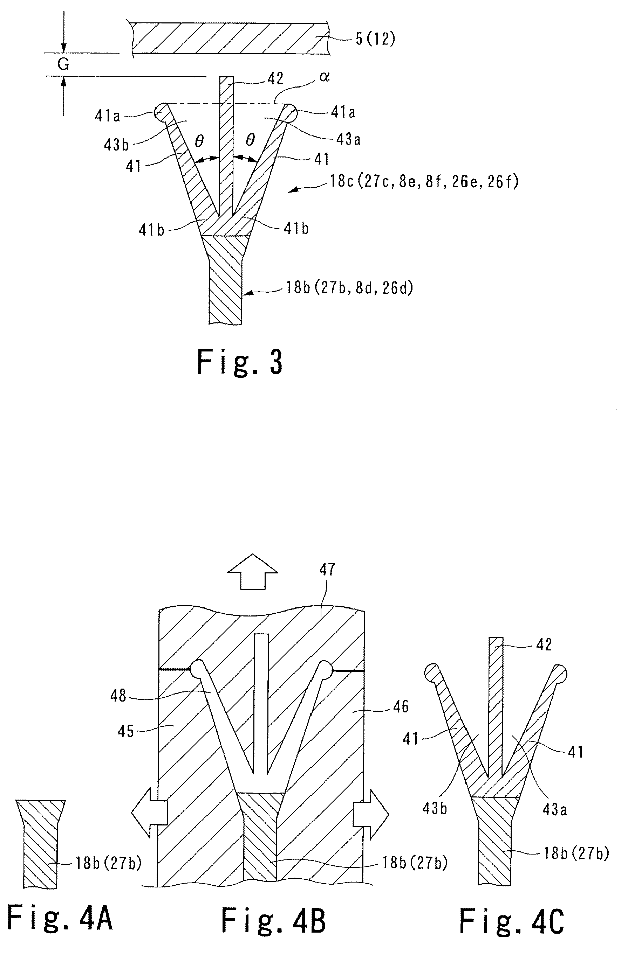

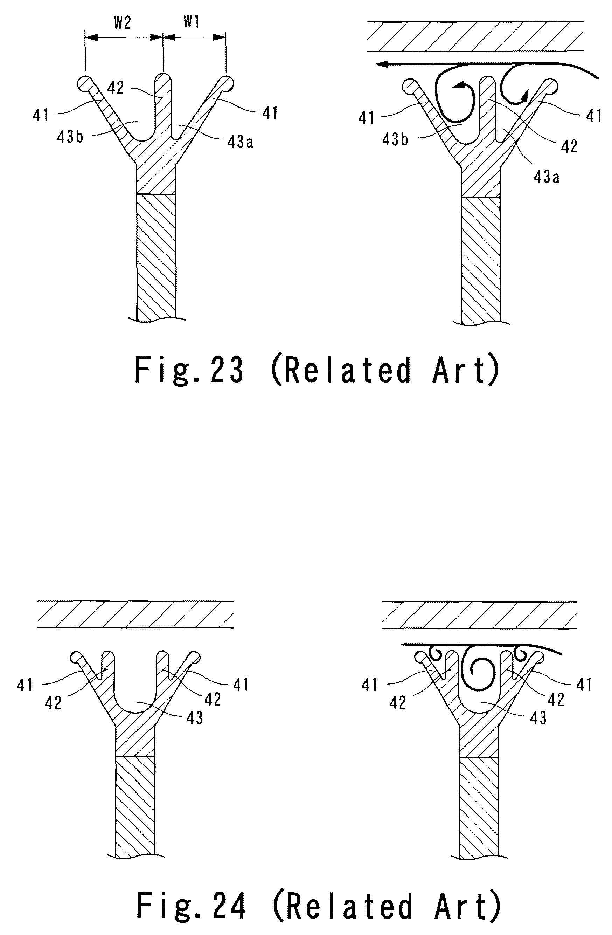

That is, as shown in Fig. 23 (corresponding to Fig. 3 in Patent Document 1), there is proposed a structure in which an auxiliary lip 42 protruding outward from a base is provided between a pair of seal lips 41 which can abut on seat portions of a case. The auxiliary lip 42 is formed to be a wall shape having a uniform thickness and is provided so that a central line passing through the center in the thickness direction is offset to one seal lip' s side, thereby allowing widths of groove 43a an 43b (W1, W2) formed between respective seal lips and the auxiliary lip to be different from each other. The structure is capable of suppressing generation of noise by suppressing generation of regular vortexes of air, even when the aperture of the opening of the door is small, by the plural groove portions 43a and 43b having different widths.

Patent Document 1 : JP-A-2008-6877

### SUMMARY OF THE INVENTION

However, the auxiliary lip 42 is provided so that the central line passing through the center in the thickness direction is offset to one seal lip's side for allowing dimensions (widths of the groove portions) of adjacent groove portions to be different, therefore, when the seal lips 41 abut on the seat portion of the case, there arises a problem that the pressing force of the seal lips with respect to the seat portion differs in the case where one seal lip abuts first and in the case where the other seal lip abuts first, which makes adjustment of the abutting force of the door difficult.

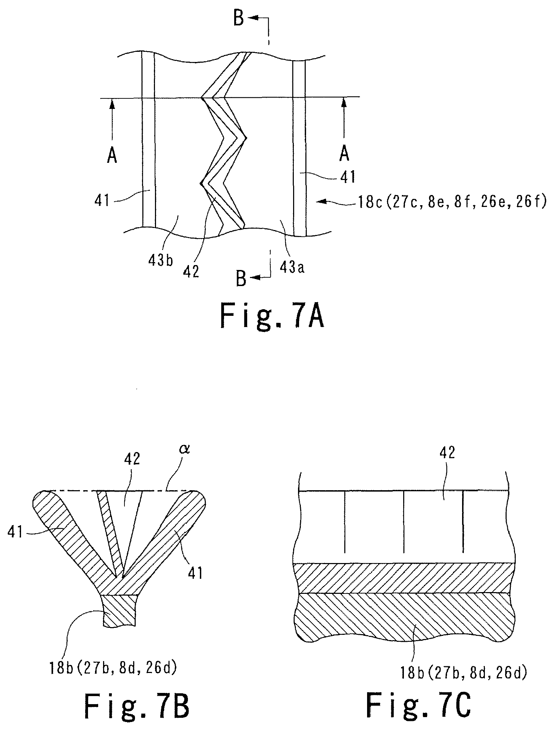

It is desirable to equalize widths of grooves between the seal lips and the auxiliary lip for equalize the abutting force with respect to the seat portion of the door whichever seal lip abuts first. Accordingly, it is possible to consider a structure in which, as shown in Fig. 24 (corresponding to Fig. 7 in Patent Document 1), auxiliary lips 42 are formed to extend outward from intermediate parts of respective seal lips 41 so that the auxiliary lips 42 are symmetrical with respect to a flat surface including the door body. However, flexibility of the seal lips 41 may be reduced when plural auxiliary lips 42 are provided.

The present invention has been made in view of the above circumstances, and an object thereof is to provide a door for an air conditioner capable of equalizing the abutting force of the door whichever seal lip abuts on the seat portion first in the case where a pair of seal lips are provided, and capable of securing flexibility of the seal lips, and further, capable of reducing noise occurring due to the air passing between the inner wall of the case and the seal lips effectively.

According to an embodiment of the present invention, there is provided a door for an air conditioner arranged in a case provided with an air passage in which air is circulated, which changes the air flow in the case or opens/closes an opening formed in the case, including a door body rotating around a rotary shaft and a seal structure provided in a portion corresponding to a seat portion formed in the case around the door body and pressed onto the seat portion to thereby block between the door body and the seat portion, in which the seal structure includes a pair of seal lips provided along an axial direction or a radial direction of the rotary shaft and protruding toward the outside of the door body, which is elastically deformed by being pressed onto the seat portions, and an auxiliary lip provided between the pair of seal lips and protruding toward the outside of the door body, the auxiliary lip is formed so that a tip end portion thereof is in a position apart from the door body farther than a virtual line connecting respective tip end portions of the pair of seal lips and angles made by the auxiliary lip and respective seal lips are equivalent, and a protruding amount of the auxiliary lip is set so that the auxiliary lip does not contact an inner wall of the case (claim 1).

Accordingly, one auxiliary lip is provided between the pair of seal lips, and the angles made by the auxiliary lip and the respective seal lips are made to be equivalent to thereby equalize dimensions of groove portions formed on both sides of the auxiliary lip, therefore, abutting conditions of the respective lips can be equivalent and the flexibility as the seal structure can be secured. Furthermore, the height of the auxiliary lip is made to be higher than the virtual line connecting respective tip end portions of the pair of seal lips to each other (the tip end portion is positioned apart from the door body farther than the virtual line), thereby preventing the generation of vortexes in the groove portions on both sides of the auxiliary lip and suppressing the generation of noise.

Here, it is preferable that the protruding amount of the auxiliary lip is set so that the tip end portion of the auxiliary lip is apart from the inner wall of the case with an approximately fixed gap (claim 2).

In the case where the gap between the tip end portion of the auxiliary lip and the inner wall of the case is not fixed, the amount of air passing a portion where the gap is large is increased and vortexes are generated due to the air passing the portion, which may generate noise. As the gap between the tip end portion of the auxiliary lip and the inner wall of the case is approximately fixed, it is possible to suppress local generation of vortexes and to reduce the generation of noise.

Also according to another embodiment of the invention, there is provided a door for an air conditioner arranged in a case provided with an air passage in which air is circulated, which changes the air flow in the case or opens/closes an opening formed in the case, including a door body rotating around a rotary shaft and a seal structure provided in a portion corresponding to a seat portion formed in the case around the door body and pressed onto the seat portion to thereby block between the door body and the seat portion, in which the seal structure includes a pair of seal lips provided along an axial direction or a radial direction of the rotary shaft and protruding toward the outside of the door body, which is elastically deformed by being pressed onto the seat portions, and an auxiliary lip provided between the pair of seal lips and protruding toward the outside of the door body, the auxiliary lip is formed so that a tip end portion thereof is on a virtual line connecting respective tip end portions of the pair of seal lips or in a position closer to the door body than the virtual line, and dimensions of groove portions formed between the auxiliary lip and respective seal lips are made to be equivalent (claim 3).

Accordingly, the auxiliary lip is provided between the pair of seal lips and the dimensions of the groove portions on both sides of the auxiliary lip are made to be equivalent in the above structure, abutting conditions of the respective lips can be equivalent and the flexibility as the seal structure can be secured. The height of the auxiliary lip is made to be equal to or lower than the virtual line connecting respective tip end portions of the pair of seal lips to each other, thereby allowing vortexes generated in respective groove portions on the upstream side and the downstream side of the auxiliary lip to be uneven to suppress the generation of noise.

As methods for equalizing the dimensions of the groove portions on both sides of the auxiliary lip, angles made by the auxiliary lip and the respective seal lips may be equalized (claim 4), or distances between the tip end portion of the auxiliary lip and the respective tip end portions of the seal lips may be changed in an extending direction of the seal lip, and dimensions of the groove portion on the upstream side and the groove portion on the downstream side of the auxiliary lip are made to be equivalent as a whole (claim 5).

It is also possible that the protruding amount of the auxiliary lip may be changed in the extending direction of the seal lips under the condition in which the tip end portion of the auxiliary lip is on the virtual line connecting respective tip end portions of the pair of seal lips to each other or in the position closer to the door body than the virtual line (claim 6), or the thickness of the auxiliary lip may be changed in the extending direction of the seal lips to thereby allow vortexes generated in the groove portions on the upstream side and the downstream side of the auxiliary lip to be uneven and to suppress the generation of noise (claim 7).

Furthermore, according to further another embodiment of the invention, there is provided a door for an air conditioner arranged in a case provided with an air passage in which air is circulated, which changes the air flow in the case or opens/closes an opening formed in the case, including a door body rotating around a rotary shaft and a seal structure provided in a portion corresponding to a seat portion formed in the case around the door body and pressed onto the seat portion to thereby block between the door body and the seat portion, in which the seal structure includes a pair of seal lips provided along an axial direction or a radial direction of the rotary shaft and protruding toward the outside of the door body, which is elastically deformed by being pressed onto the seat portions, and the thickness of the seal lips is changed in the extending direction of the seal lips (claim 8).

Accordingly, the seal structure is formed only by the pair of seal lips in the above structure (the auxiliary lip is removed), thereby allowing abutting conditions of respective seal lips to be equivalent and securing flexibility as the seal structure. As the thickness of the seal lips is changed in the extending direction, the shape of vortexes generated in the groove portion can be uneven and the generation of noise can be suppressed.

Here, in the case where the thickness of the seal lips is changed in the extending direction of the seal lips, a cross-sectional area of the groove portion formed between the pair of seal lips (a width of the groove portion) may be changed in the extending direction of the seal lips (claim 9). The shape of vortexes generated in the groove portion can be uneven in the extending direction of the seal lip and the generation of noise can be suppressed more positively.

As described above, according to the present invention, the seal structure provided in the door body of the door for the air conditioner is configured by including a pair of seal lips which is elastically deformed by being pressed onto the seat portions, and the auxiliary lip provided between the pair of seal lips and protruding toward the outside of the door body, in which the tip end portion of the auxiliary lip is set on the outer side of the virtual line connecting respective tip end portions of the pair of seal lips (on the side apart from the case body) and angles made by the auxiliary lip and respective seal lips are equalized, and further, the protruding amount of the auxiliary lip is set so that the auxiliary lip does not contact the inner wall of the case, therefore, abutting conditions of respective seal lips can be equivalent and the flexibility as the seal structure can be secured. Additionally, as the generation of vortexes in the groove portions between the auxiliary lip and the seal lips is prevented, thereby suppressing the generation of noise.

The seal structure provided in the door body of the door for the air conditioner is configured by including a pair of seal lips which is elastically deformed by being pressed onto the seat portions, and the auxiliary lip provided between the pair of seal lips and protruding toward the outside of the door body, in which the tip end portion of the auxiliary lip is set on the virtual line connecting respective tip end portions of the pair of seal lips or in a position closer to the door body than the virtual line, and dimensions of the groove portions formed between the auxiliary lip and respective seal lips are made to be equivalent, therefore, abutting conditions of respective seal lips can be equivalent and the flexibility as the seal structure can be secured. The height of the auxiliary lip is made to be equal to or lower than the virtual line connecting respective tip end portions of the pair of seal lips, thereby allowing vortexes generated in respective groove portions on the upstream side and the downstream side of the auxiliary lip to be uneven to suppress the generation of noise.

Furthermore, the seal structure provided in the door body of the door for the air conditioner is configured only by the pair of seal lips which is elastically deformed by being pressed onto the seat portions, and the thickness of the seal lips is changed in the extending direction of the seal lips, therefore, abutting conditions of respective seal lips can be equivalent and the flexibility as the seal structure can be secured. As the thickness of the seal lips is changed in the extending direction, the shape of vortexes generated in the groove portion can be uneven and the generation of noise can be suppressed.

### BRIEF DESCRIPTION OF THE DRAWINGS

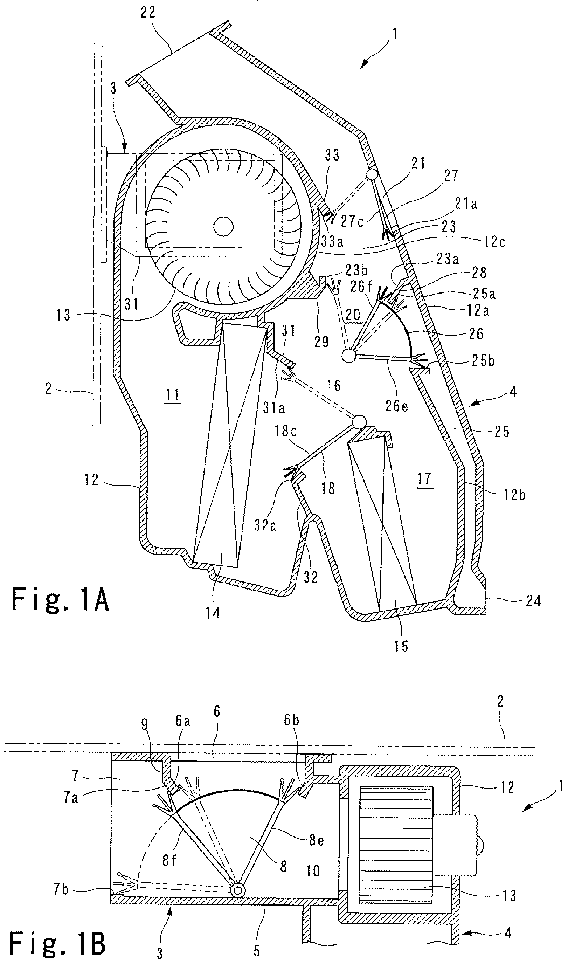

Figs. 1A and 1B are views showing a structure example of a vehicle air conditioner to which a door for an air conditioner according to the present invention is applied, in which Fig. 1A is a schematic cross-sectional view and Fig. 1B is a cross-sectional view showing an intake unit;

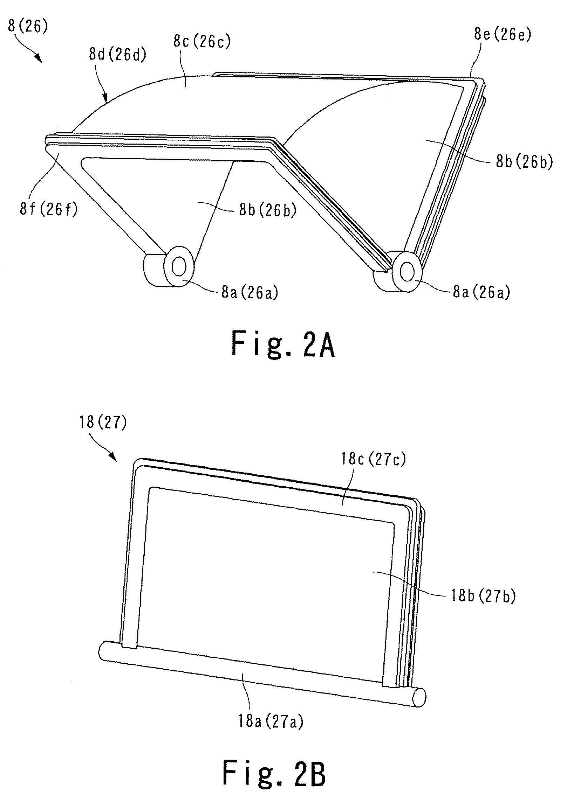

Figs. 2A and 2B are perspective views showing the door for the air conditioner according to the present invention, in which Fig. 2A is a view showing an example of a rotary door as the door for the air conditioner and Fig. 2B is a view showing an example of a cantilever door as the door for the air conditioner;
Fig. 3 is a view showing a first embodiment of a seal structure provided in a door body of the door for the air conditioner according to the present invention;
Figs. 4A to 4C are explanatory views for explaining a manufacturing method of the seal structure shown in Fig. 3;

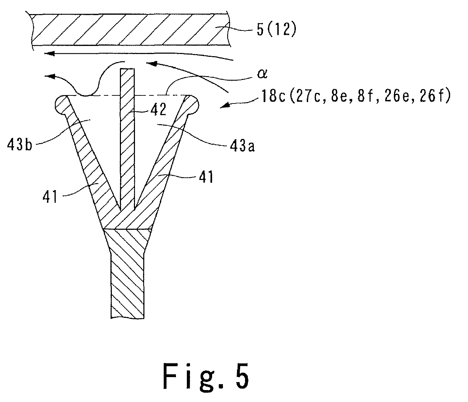

Fig. 5 is a view for explaining the flow of air when using the seal structure shown in Fig. 3;

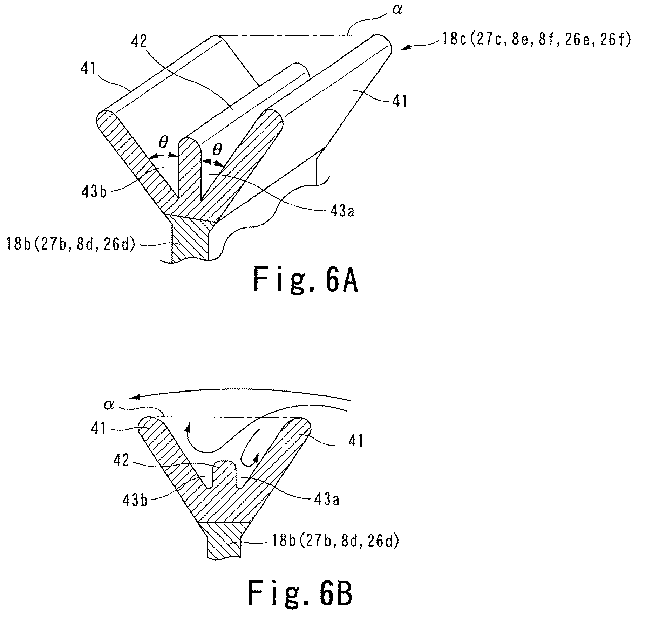

Figs. 6A and 6B are views showing a first example of a second embodiment of a seal structure provided in a door body of a door for an air conditioner according to the present invention, in which Fig. 6A is a perspective view thereof and Fig. 6B is a cross-sectional view thereof;
Figs. 7A to 7C are views showing a second example of the second embodiment, in which Fig. 7A is a view seen from above so as to face an auxiliary lip of the seal structure, Fig. 7B is a cross-sectional view taken along A-A line of Fig. 7A and Fig. 7C is a cross-sectional view taken along B-B line of Fig. 7A;

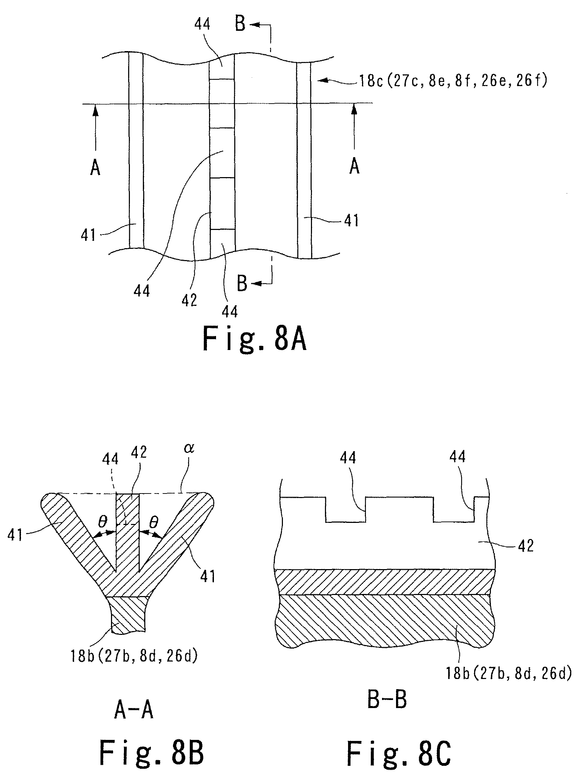

Figs. 8A to 8C are views showing a third example of the second embodiment, in which Fig. 8A is a view seen from above so as to face an auxiliary lip of the seal structure, Fig. 8B is a cross-sectional view taken along A-A line of Fig. 8A and Fig. 8C is a cross-sectional view taken along B-B line of Fig. 8A;

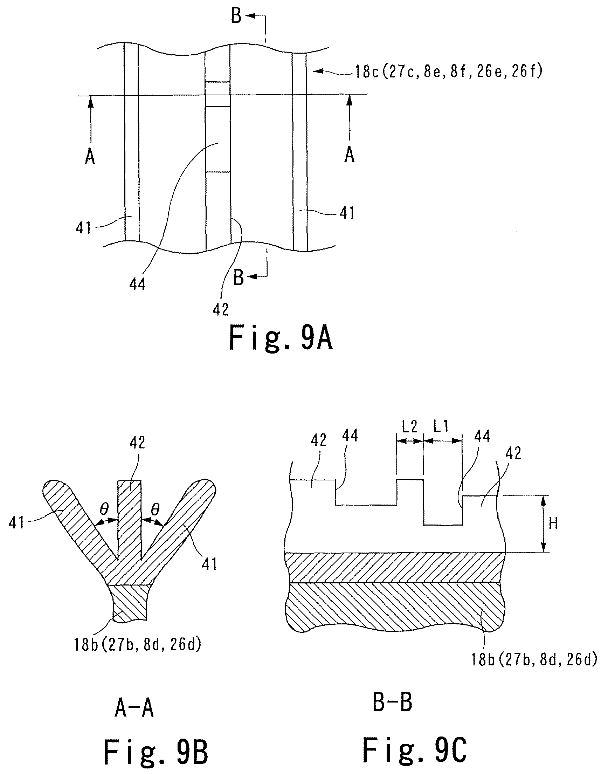

Figs. 9A to 9C are views showing a fourth example of the second embodiment, in which Fig. 9A is a view seen from above so as to face an auxiliary lip of the seal structure, Fig. 9B is a cross-sectional view taken along A-A line of Fig. 9A and Fig. 9C is a cross-sectional view taken along B-B line of Fig. 9A;

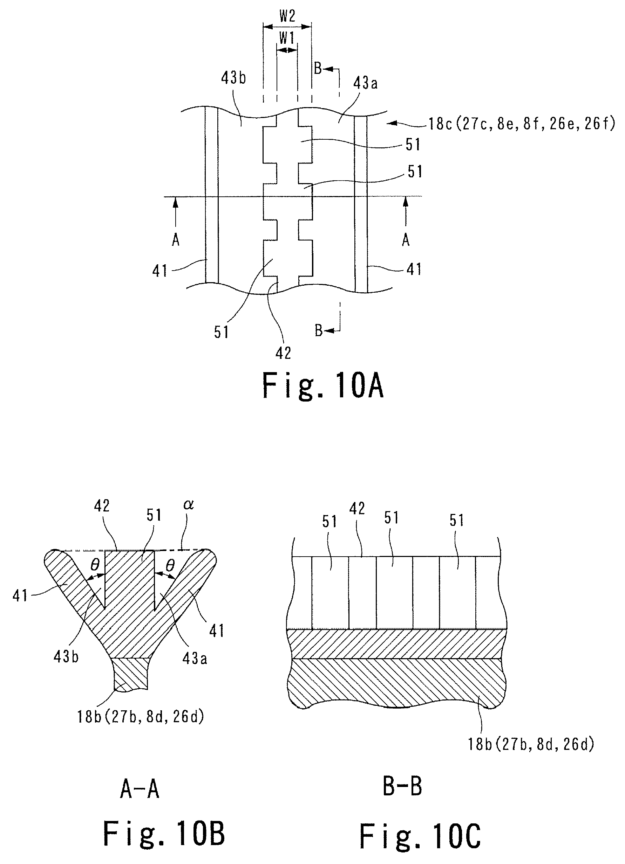

Figs. 10A to 10C are views showing a fifth example of the second embodiment, in which Fig. 10A is a view seen from above so as to face an auxiliary lip of the seal structure, Fig. 10B is a cross-sectional view taken along A-A line of Fig. 10A and Fig. 10C is a cross-sectional view taken along B-B line of Fig. 10A;

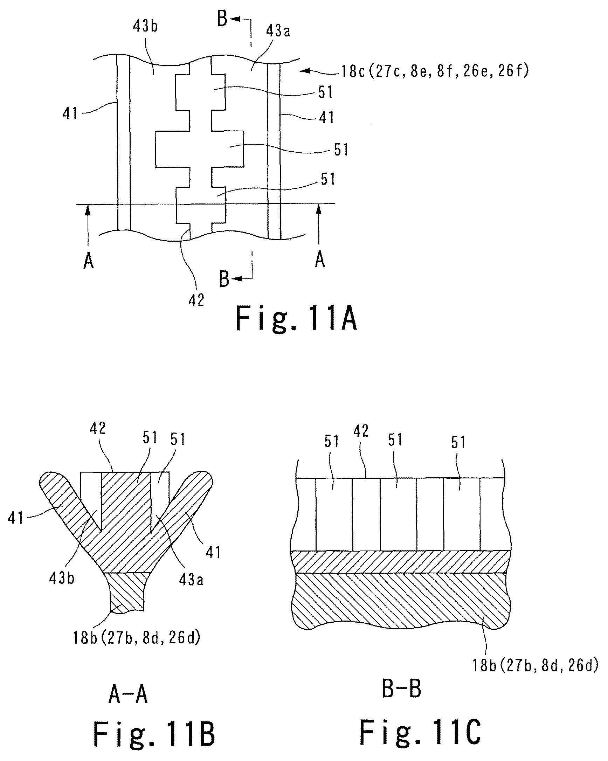

Figs. 11A to 11C are views showing a sixth example of the second embodiment, in which Fig. 11A is a view seen from above so as to face an auxiliary lip of the seal structure, Fig. 11B is a cross-sectional view taken along A-A line of Fig. 11A and Fig. 11C is a cross-sectional view taken along B-B line of Fig. 11A;

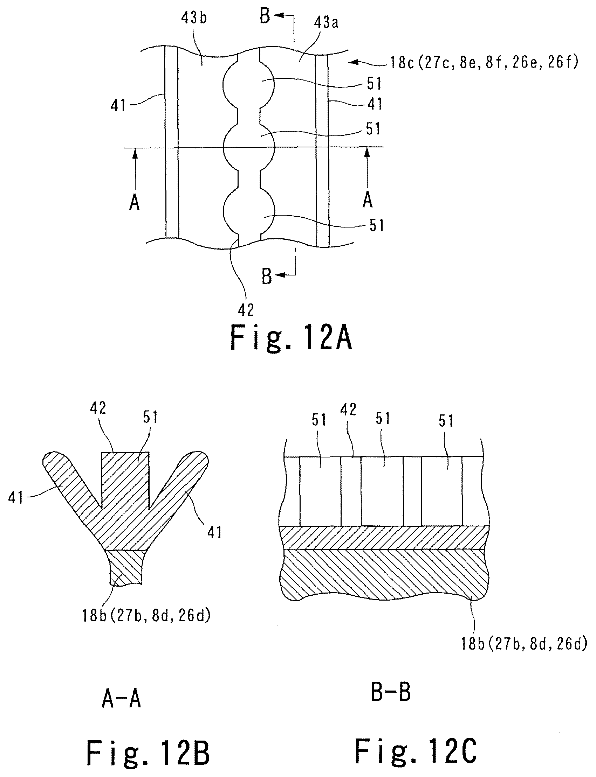

Figs. 12A to 12C are views showing a seventh example of the second embodiment, in which Fig. 12A is a view seen from above so as to face an auxiliary lip of the seal structure, Fig. 12B is a cross-sectional view taken along A-A line of Fig. 12A and Fig. 12C is a cross-sectional view taken along B-B line of Fig. 12A;

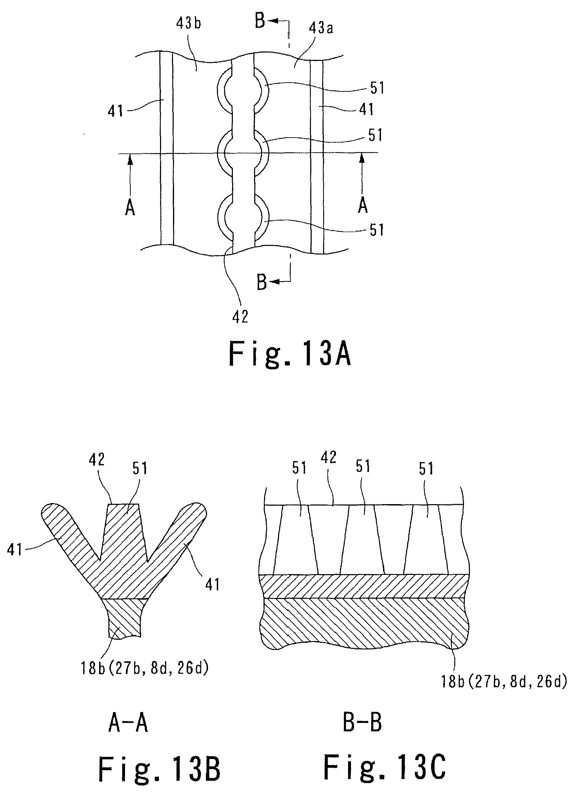

Figs. 13A to 13C are views showing an eighth example of the second embodiment, in which Fig. 13A is a view seen from above so as to face an auxiliary lip of the seal structure, Fig. 13B is a cross-sectional view taken along A-A line of Fig. 13A and Fig. 13C is a cross-sectional view taken along B-B line of Fig. 13A;

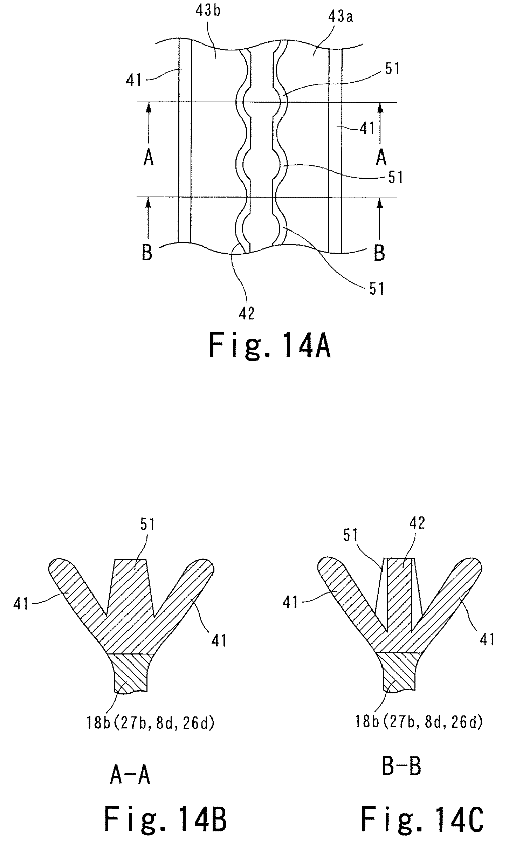

Figs. 14A to 14C are views showing a ninth example of the second embodiment, in which Fig. 14A is a view seen from above so as to face an auxiliary lip of the seal structure, Fig. 14B is a cross-sectional view taken along A-A line of Fig. 14A and Fig. 14C is a cross-sectional view taken along B-B line of Fig. 14A;

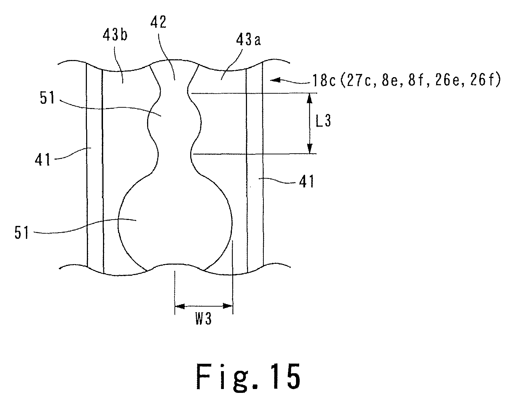

Fig. 15 is a view showing a tenth example of the second embodiment, which is a view seen from above so as to face an auxiliary lip of the seal structure;

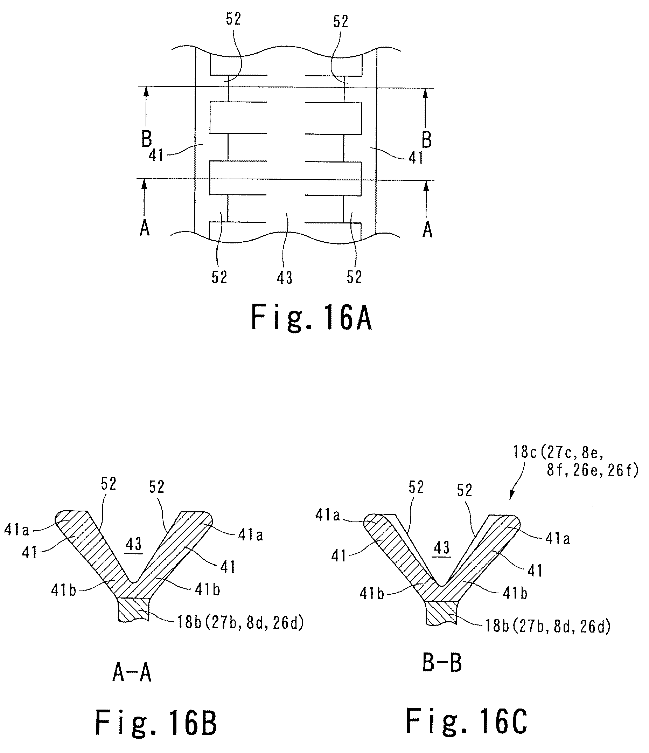

Fig. 16A to Fig. 16C views showing a first example of a third embodiment of a seal structure provided in a door body of a door for an air conditioner according to the present invention; in which Fig. 16A is a view seen from above so as to face a groove portion of the seal structure, Fig. 16B is a cross-sectional view taken along A-A line of Fig. 16A and Fig. 16C is a cross-sectional view taken along B-B line of Fig. 16A;

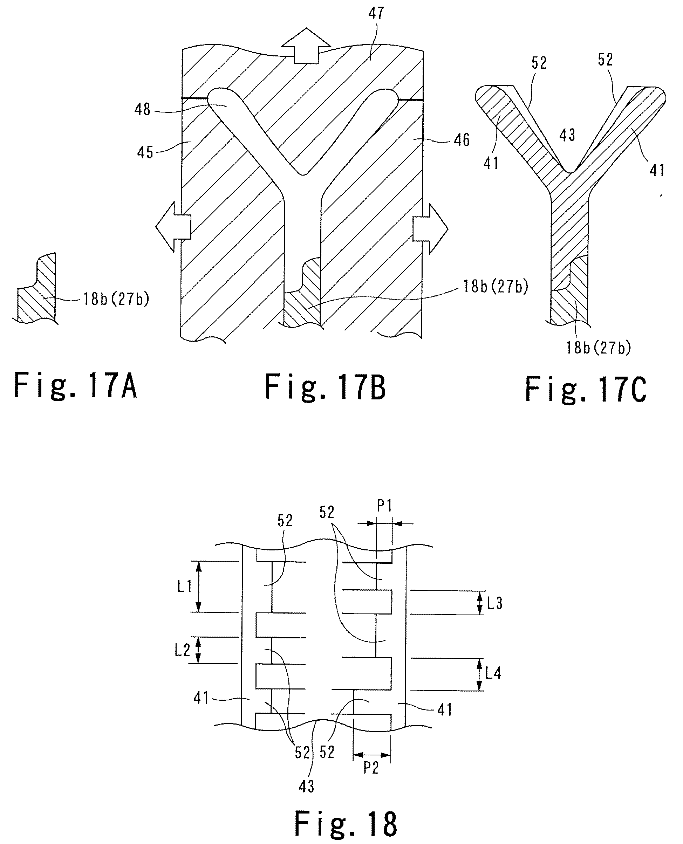

Figs. 17A to Fig. 17C are explanatory views for explaining a manufacturing method of the seal structure shown in Figs. 16A to Fig. 16C;
Fig. 18 is a view showing a second example of the third embodiment of the seal structure provided in the door body of the door for the air conditioner according to the present invention, which is a view seen from above so as to face a groove portion of the seal structure;

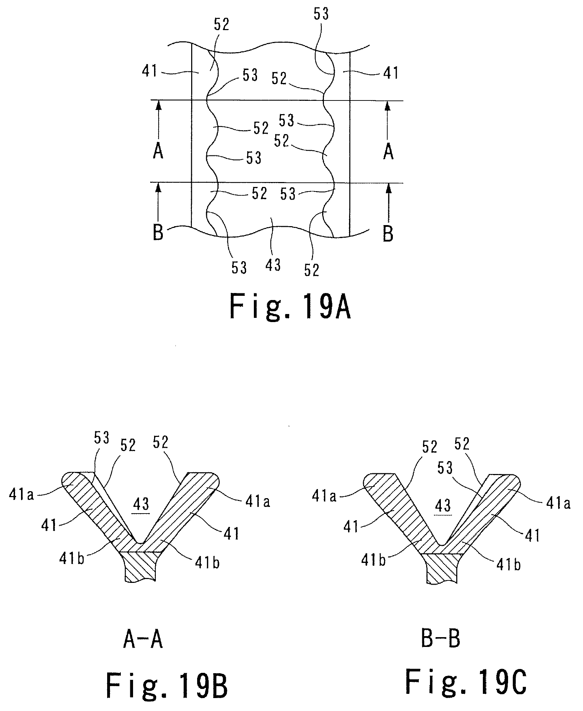

Figs. 19A to 19C are views showing a third example of the third embodiment of the seal structure provided in the door body of the door for the air conditioner according to the present invention, in which Fig. 19A is a view seen from above so as to face a groove portion of the seal structure, Fig. 19B is a cross-sectional view taken along A-A line of Fig. 19A and Fig. 19C is a cross-sectional view taken along B-B line of Fig. 19A;

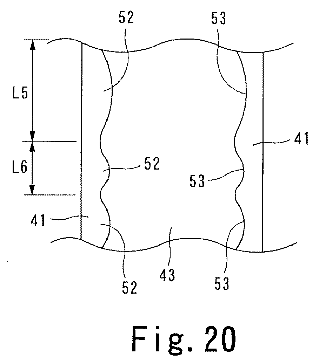

Fig. 20 is a view showing a fourth example of the third embodiment of the seal structure provided in the door body of the door for the air conditioner according to the present invention, which is a view seen from above so as to face a groove portion of the seal structure;

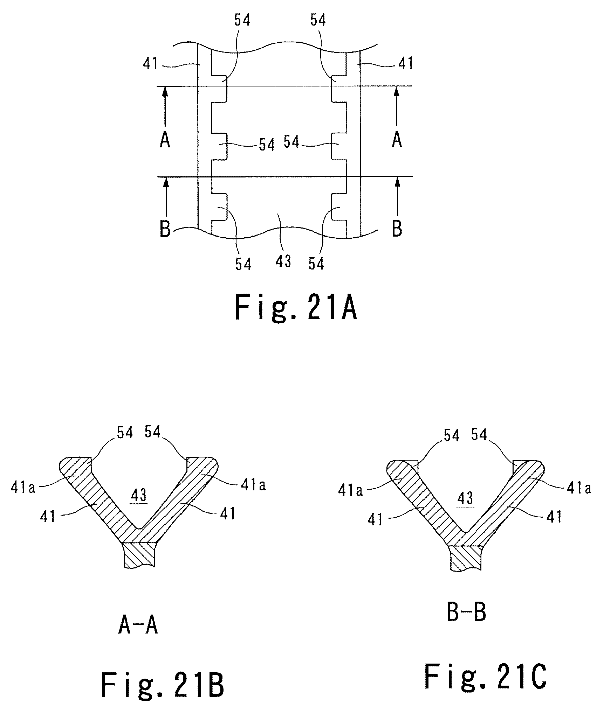

Figs. 21A to 21C are views showing a fifth example of the third embodiment of the seal structure provided in the door body of the door for the air conditioner according to the present invention, in which Fig. 21A is a view seen from above so as to face a groove portion of the seal structure, Fig. 21B is a cross-sectional view taken along A-A line of Fig. 21A and Fig. 21C is a cross-sectional view taken along B-B line of Fig. 21A;

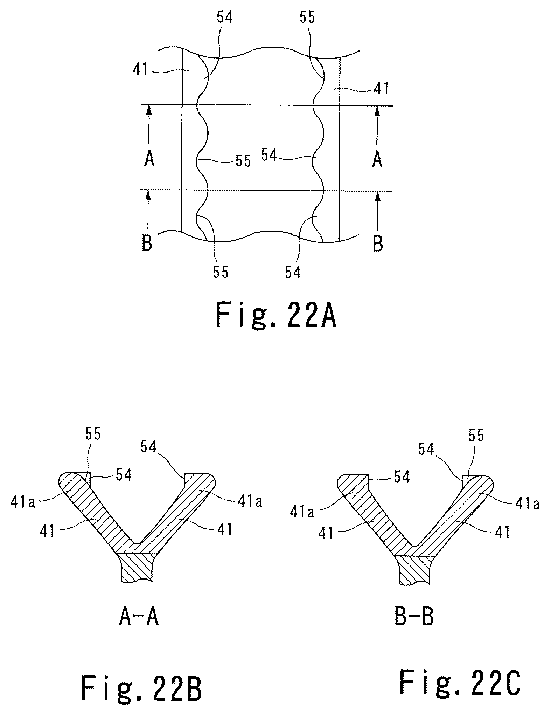

Figs. 22A to 22C are views showing a sixth example of the third embodiment of the seal structure provided in the door body of the door for the air conditioner according to the present invention, in which Fig. 22A is a view seen from above so as to face a groove portion of the seal structure, Fig. 22B is a cross-sectional view taken along A-A line of Fig. 22A and Fig. 22C is a cross-sectional view taken along B-B line of Fig. 22A;
Fig. 23 is a cross-sectional view showing a related-art seal structure; and
Fig. 24 is a cross-sectional view showing another related-art seal structure.

### DESCRIPTION OF THE PREFERRED EMBODIMENTS

Hereinafter, embodiments of the present invention will be explained with reference to the attached drawings.

In Fig. 1, a vehicle air conditioner 1 is a center-placed type one mounted on a center console section of a vehicle, which is disposed closer to a vehicle interior' s side than a partition board 2 partitioning between an engine room and the vehicle interior and is basically configured by an intake unit 3 and an air conditioning unit 4.

An intake unit 3 is provided on the uppermost stream side of an air flow path 11 of the later-described air conditioning unit 4, in which an intake door 8 is housed in an intake case 5 provided with an air flow path 10 thereinside. An introducing ratio between outside air introduced from an outside air inlet port 6 provided in the intake case 5 and inside air introduced from an inside air inlet port 7 is adjusted by the intake door 8.

In the example, the intake door 8 is configured by a rotary door, rotating from a position where the outside air inlet port 6 of the intake case 5 is blocked to a position where the inside air inlet port 7 is blocked. The inside air inlet port 7 is fully opened when the outside air inlet port 6 is fully closed, and the outside air inlet port 6 is fully opened when the inside air inlet port 7 is fully closed.

In the air conditioning unit 4, a blower 13, an evaporator 14, a heater core 15 and so on are housed in an air conditioning case 12 in which the air flow path 11 is formed thereinside at approximately the same position in a vehicle width direction. In the example, the evaporator 14 is arranged in a lower part which is a downstream side of the blower 13, which is provided to stand so as to allow all air introduced into the air conditioning case 12 to pass. The heater core 15 is provided to stand in a lower part of the air conditioning case 12 on the downstream side (vehicle interior side) of the evaporator 14.

A cool air passage 16 guiding the air transmitted through the evaporator 14 to the downstream side while bypassing the heater core 15 is formed above the heater core 15. On the other hand, a hot air passage 17 guiding the air passing through the heater core 15 to the downstream side is formed from behind the heater core 15 toward an upper direction.

An air mix door 18 adjusting the ratio between air flowing in the cool air passage 16 and air flowing in the hot air passage 17 is arranged on the upper front side of the heater core 15. The air mix door 18 is configured by, for example, a plate-shaped cantilever door, which rotates from a position where the cool air passage 16 is fully closed to a position where the hot air passage 16 is fully closed, so that the hot air passage 17 is fully opened when the cool air passage 16 is fully closed and the cool air passage 16 is fully opened when the hot air passage 17 is fully closed.

Furthermore, in an upper part of the heater core 15 on a downstream side, a mix area 20 in which the air passing through the cool air passage 16 and the air passing through the hot air passage 17 are mixed is formed. Also, in an upper part of the air conditioning case 12 on the downstream side of the mix area 20, there is formed an upper blowout passage 23 communicating to a vent blowout opening 21 blowing out air upward in the vehicle interior and a defroster blowout opening 22 blowing out air toward a front glass. On a rear side (right side in Fig. 1) of the air conditioning case 12 which is the downstream side of the mix area 20, a lower blowout passage 25 communicating to a foot blowout opening 24 blowing out air to a lower direction of the vehicle interior is provided between a rear wall 12a facing the vehicle interior side of the air conditioning case 12 and a partition wall 12b provided to stand from the bottom inside the rear wall 12a (left side of the rear wall 12a in Fig. 1).

In the example, the ratio of the air passing through the mix area 20 flowing in the upper blowout passage 23 and the lower blowout passage 25 respectively is adjusted by a first mode door 26 and the ratio of the air flowing into the upper blowout passage 23 flowing in the vent blowout opening 21 and the defroster blowout opening 22 respectively is adjusted by a second mode door 27.

Here, the first mode door 26 is configured by a rotary door, which rotates from a position where the lower blowout passage 25 is blocked to a position where the upper blowout passage 23 is blocked. The upper blowout passage 23 is fully opened when the lower blowout passage 25 is fully closed, and the lower blowout passage 25 is fully opened when the upper blowout passage 23 is fully closed.

The second mode door 27 is configured by a plate-shaped cantilever door, which rotates from a position where the vent blowout opening 21 is fully closed to a position where the defroster blowout opening 22 is fully closed.

The first mode door 26 and the second mode door 27 move in conjunction with each other by allowing one ends of respective axes to protrude to the outside of the air conditioning case 12 to link not-shown levers provided in these ends by a link member. Or, the first mode door 26 and the second mode door 27 are rotated by a driver of the vehicle by a well-known method with cables connected to one ends of respective axes protruding to the outside of the air conditioning case 12.

In the above structure, as shown in Fig. 2A, the intake door 8 and the first mode door 26 as the rotary doors are formed by including a pair of supported portions 8a (26a) supported by a not-shown rotary shaft provided on the case (the intake case 5, air conditioner case 12) side so as to rotate, a pair of sector-shaped side wall portions 8b (26b) extended from the pair of first supported portions 8a (26a) in a radial direction so as to be parallel to each other and a curved plate portion 8c (26c) disposed between outer peripheral edges of the pair of side wall portions 8b (26b) and formed to be curved having an inner peripheral surface having a concave shape with respect to the rotary shaft. The side wall portions 8b (26b) and the curved plate portion 8c (26c) configure a door body 8d (26d), and seal structures 8e, 8f (26e, 26f) are provided in opening peripheral edge portions on both ends in the rotation direction of the door body 8d (26d), which are provided along an axial direction or a radial direction of the rotary shaft in portions corresponding to seat portions formed in the cases (the intake case 5, the air conditioning case 12) so as to protrude to the outside of the door body 8d (26d), which are pressed onto the seat portions to thereby block between the door body 8d (26d) and the seat portions.

The seal structures 8e and 8f of the intake door 8 will be explained. In the intake case 5, seat portions 6a, 6b, 7a and 7b are provided in a partition wall 9 partitioning between the outside air inlet port 6 and the inside air inlet port 7 and portions opposite to the partition wall 9 at inner edges of respective inlet ports in the rotation direction of the door as shown in Fig. 1B. One seal structure 8e of the intake door 8 is arranged between the seat portion 6a of the partition wall 9 and the seat portion 6b provided in the inner edge of the outside air inlet port 6 so as to rotate with the rotation of the intake door 8, and the other seal structure 8f is arranged between the seat portion 7a of the partition wall 9 and the seat portion 7b provided in the inner edge of the inside air inlet port 7 so as to rotate with the rotation of the intake door 8. When one seal structure 8e abuts on the seat portion 6b provided in the inner edge of the outside inlet port 6, the other structure 8f abuts on the seat portion 7a of the partition wall 9 to block the outside inlet port 6 (opens the inside inlet port 7). When the other seal structure 8f abuts on the seat portion 7b provided in the inner edge of the inside air inlet port 7, one seal structure 8e abuts on the seat portion 6a of the partition wall 9 to block the inside air inlet port 7 (open the outside air inlet port 6).

The seal structures 26e and 26f of the first mode door 26 will be explained. There are provided a boundary wall 28 provided to protrude from the rear wall 12a of the air conditioning case 12 toward the inside in a boundary portion between the upper blowout passage 23 and the lower blowout passage 25, a protruding piece 29 provided in a blower housing wall 12c which is opposite to the boundary wall 28 in the rotating direction of the door of the upper blowout passage 23, and seat portions 23a, 23b, 25a and 25b at an upper end portion of the partition wall 12b opposite to the boundary wall 28 in the rotation direction of the door of the lower blowout passage 25, respectively. One seal structure 26e of the first mode door 26 is disposed between the seat portion 25a of the boundary wall 28 and the seat portion 25b provided at the upper end portion of the partition wall 12b so as to rotate with the rotation of the first mode door 26, and the other seal structure 26f is disposed between the seat portion 23a of the boundary wall 28 and the seat portion 23b provided in the protruding piece 29 of the blower housing wall 12c so as to rotate with the rotation of the first mode door 26. When one seal structure 26e abuts on the seat portion 25b provided in the upper end portion of the partition wall 12b, the other seat structure 26f abuts on the seat portion 23a of the boundary wall 28 to block the lower blowout passage 25 (open the upper blowout passage 23). When the other seal structure 26f abuts on the seat portion 23b provided in the protruding piece 29 of the blower housing wall 12c, one seal structure 26e abuts on the seat portion 25a of the boundary wall 28 to block the upper blowout passage 23 (open the lower blowout passage 25).

On the other hand, as shown in Fig. 2B, the air mix door 18 and the second mode door 27 which are plate-shaped cantilever doors are formed by including a rotary shaft 18a supported by the air conditioning case 12 so as to rotate, and a flat-shaped door body 18b (27b) fixed to the rotary shaft 18a and extending outward in the radial direction of the rotary shaft 18a (27a). In a portion of the door body 18b (27b) corresponding to the seat portions formed in the air conditioning case 12 (a peripheral portion of the door body 18b (27b) in this example), a seal structure 18c (27c) is provided along the axial direction or the radial direction of the rotary shaft 18a (27a) and protruding toward the outside of the door body 18b (27b), which is pressed onto the seat portion to thereby block a portion between the door body 18b (27b) and the seat portion.

The seal structure 18c of the air mix door 18 will be explained. A seat portion 31a is formed in a protruding piece (a protruding piece 31 formed to protrude from a holding portion holding the evaporator 14 in this example) formed to protrude on the mix door's side in an upper end portion of the opening of the cool air passage 16 in the air conditioning case 12, and a seat portion 32a is provided in a protruding portion 32 separated from the heater core 15 and formed to protrude upward from a bottom portion of the air conditioning case 12 on an upstream side of the heater core 15. The seal structure 18c of the air mix door 18 moves between the seat portion 31a of the protruding piece 31 and the seat portion 32a of the protruding piece 32 with the rotation of the air mix door 18.

The seal structure 27c of the second mode door 27 will be explained. In the air conditioning case 12, a seat portion 21a is provided in a lower edge portion of the vent blowout opening 21, and a seat portion 33a is formed in a protruding piece 33 provided in the blower housing wall 12c opposed to the vent blowout opening 21. The seat structure 27c of the second mode door 27 moves between the seat portion 21a in the lower edge portion of the vent blowout opening 21 and the seat portion 33a provided in the protruding piece 33 of the blower housing wall 12c with the rotation of the second mode door 27.

### [First Embodiment]

A first embodiment of the seal structure is shown in Fig. 3 to Fig. 5. Respective seal structures 8e, 8f, 26e, 26f, 18c and 27c are formed by fixing elastic members integrally with the door bodies 8d, 26d, 18b and 27b, which are configured by including a pair of seal lips 41 which is elastically deformed by being pressed onto the seat portions and the auxiliary lip 42 provided between the pair of seal lips 41 and protruding toward the outside of the door body.

The seal lips 41 are inclined with respect to the protruding direction of the seal structure at a predetermined angle so that the distance between the seal lips 41 is increased toward the tip ends. In this example, respective seal lips 41 are formed so that the thickness is reduced toward the tip ends to be elastically deformed easily. Furthermore, swollen portions 41a having an approximately semicircle in cross section are formed at tip end portions of the seal lips to thereby secure a given rigidity.

The auxiliary lip 42 is provided to protrude from between base end portions 41b of the pair of seal lips 41, which is extended so that the tip end portion thereof is in the outside (the side apart from the door body) of the door bodies 8d, 26d, 18b and 28b farther than a virtual line α connecting between respective tip end portions of the pair of seal lips 41 and angles θ made by the auxiliary lip 42 and respective seal lips 41 are equal to each other. In other words, dimensions (widths of grove portions) of groove portions on both sides of the auxiliary lip 42 (a groove portion 43a on the upstream side of the auxiliary lip 42 and a groove portion 43b on the downstream side thereof) are made to be equivalent, and the seal lips 41 are formed to be symmetrical with respect to the auxiliary lip 42. Distances between the tip end portion of the auxiliary lip 42 and tip end portions of respective seal lips 41 are formed to be uniform without being changed in the extending direction of the seal lips 41, and a protruding amount (height) of the auxiliary lip 42 is formed to be uniform without being changed in the extending direction of the seal lips 41.

Furthermore, the auxiliary lip 42 is formed so as not to contact inner surfaces of the cases (the intake case 5, the air conditioning case 12), and the protruding amount of the auxiliary lip 42 is set so that a distance between the tip end of the auxiliary lip 42 and inner walls of cases (the intake case 5, the air conditioning case 12) is a predetermined gap G (for example, 1mm) in a place where the auxiliary lip 42 is constantly opposed to the inner walls of the cases, so that the auxiliary lip 42 does not contact the cases.

The above-described seal lips 41 and the auxiliary lip 42 are integrally formed by an elastic member. When the plate-shaped cantilever door is cited as an example, as shown in Figs. 4A to 4C, the door body, the seal lips 41 and the auxiliary lip 42 are integrally formed by attaching a first mold 45 and a second mold 46 to the door body 18b or 27b shown in Fig. 4A from both sides so as to sandwich the door body, shaping the seal lips with the first and second molds from the tip end's side of the door body 18b or 27b, combining a third mold 47 for forming the auxiliary lip (Fig. 4B), pouring the molded elastic member into a space 48 formed by these molds, cooling the member and removing the molds (Fig. 4C). As materials for the door bodies 18b and 27b, for example, resin materials such as polypropylene with talc and ABS are used. Materials for the seal lips 41 and the auxiliary lip 42 are not particularly limited as long as they can use injection molding and have rubber properties after the molding. For example, urethane-based (TPU) resin, styrene-based (SBS, SEBS) resin and olefin-based resin are used.

As the dimensions (widths of groove portions) of the groove potions 43a and 43b on both sides of the auxiliary lip 42 are equivalent when the above seal structures 8e, 8f, 26e, 26f, 18c and 27c are used, abutting conditions of respective seal lips 41 with respect to the seat portions can be equivalent. Additionally, the auxiliary lip 42 is provided to protrude between the base end portions 41b of the pair of seal lips 41, therefore, flexibility (flexibility of the seal lips 41) as the seal structures can be secured.

As the height of the auxiliary lip 42 is set to be higher than the virtual line α connecting respective tip end portions of the pair of seal lips 41 to each other (the tip end portion of the auxiliary lip 42 is on the side separated from the door body farther than the virtual line α), it is possible to suppress the generation of vortexes itself in the groove portions 43a and 43b between the auxiliary lip 42 and the seal lips 41 to thereby suppress the generation of noise. That is, the tip end portion of the auxiliary lip 42 is higher than the virtual line α connecting the tip end portions to each other as shown in Fig. 5, therefore, the air flowing from the upstream side of the seal lip 41 flows toward the gap between the auxiliary lip 42 and the case 5 or 12 at higher speed in the upstream side of the auxiliary lip 42, vortexes do not occur the groove portion 43a on the upstream side of the auxiliary lip 42. The air passing above the auxiliary lip is likely to enter the groove portion 43b on the downstream side, however, the air does not enter the groove portion 43b as the seal lip 41 on the downstream side is also lower than the auxiliary lip 42, therefore, the generation of vortexes is suppressed, and thus the generation of noise is suppressed.

As described above, it is preferable that the tip end portion of the auxiliary lip 42 and the inner wall of the case are separated from each other so as to have the gaps G which is approximately fixed in the extending direction of the seal lips in the portions of the seal structures 18c, 27c, 8e, 8f, 26e and 26f which are constantly opposed to the inner wall surfaces of the cases 5 and 12. In the case where the gap between the auxiliary lip 42 and the inner wall surfaces of the cases 5 and 12 is not fixed in the extending direction of the seal lips, the amount of air passing through a portion where the gap is large is increased, which may generate vortexes locally and may generate noise. However, the gap is approximately fixed, therefore, the local generation of vortexes does not occur and the generation of noise can be suppressed.

### [Second Embodiment]

A second embodiment of the seal structure is shown in Fig. 6A, 6B to Fig. 15. In the embodiment, the seal structures 8e, 8f, 26e, 26f, 18c and 27c are the same as the first embodiment in the point that there is provided a pair of seal lips 41 formed along the axial direction or the radial direction of the rotary shaft and protruding toward the outside of the door bodies, which are elastically deformed by being pressed onto the seat portions, the point that there is provided the auxiliary lip 42 provided between the pair of seal lips 41 and protruding toward the outside of the door bodies 18b, 27b, 8d and 26d, and the point that the seal structures are integrally formed with the door bodies 18b, 27b, 8d and 26d by the manufacturing method shown in Figs. 4A to 4C. On the other hand, the auxiliary lip 42 differs from the first embodiment in a point that the tip end portion thereof is on the virtual line α connecting respective tip end portions of the pair of seal lips 41, or in the inside of the door bodies 18b, 27b, 8d and 26d from the virtual line α (the side closer to the door bodies than the virtual line α). Then, the groove portions 43a and 43b formed between the auxiliary lip 42 and respective seal lips 41 are formed so that dimensions thereof (volumes of the groove portions 43a and 43b) are equivalent in the entire region including the extending direction.

### [Example 1]

In an example shown in Figs. 6A and 6B, the height of the auxiliary lip 42 is lower than the virtual line α connecting respective tip end portions of the seal lips 41 to each other (the tip end portion of the auxiliary lip 42 is positioned in the side closer to the door body than the virtual line α), and the angles θ made by the auxiliary lip 42 and respective seal lips 41 are equivalent. Distances between the tip end portion of the auxiliary lip 42 and respective tip end portions of the seal lips 41 are formed to be constant (uniform) without changing in the extending direction of the seal lips 41. The protruding amount and the thickness of the auxiliary lip 42 is formed to be constant without changing in the extending direction of the seal lips 41.

In the above structure, dimensions of the groove portions 43a and 43b on both sides of the auxiliary lip 42 are equivalent, therefore, abutting conditions of respective seal lips 41 with respect to the seat portions can be equivalent. Also, the auxiliary lip 42 is provided to protrude from between base end portions of the pair of seal lips 41, therefore, flexibility as the seal structure (flexibility of the seal lips 41) can be secured.

As the height of the auxiliary lip 42 is set to be lower than the virtual line α connecting respective tip end portions of the pair of seal lips 41 to each other, the air flow passing above the seal lip 41 on the upstream side (right-side seal lip 41 in Fig. 6) is diffused toward the groove portion 43b of on the downstream side of the auxiliary lip 42, and the pressure of the air in the groove portion 43b is increased to be relatively higher than the pressure in the groove portion 43a on the upstream side of the auxiliary lip 42, thereby allowing vortexes between the upstream side and the downstream side of the auxiliary lip 42 to be uneven. Particularly in the example, vortexes flowing in the reverse direction (vortexes in the clockwise direction in the drawing) with respect to the vortexes generated in the groove portion 43a on the upstream side are generated between the seal lips 41 from the upstream side to the downstream side of the auxiliary lip 42, thereby suppressing the generation of noise.

### [Example 2]

In an example shown in Figs. 7A to 7C, the tip end portion of the auxiliary lip 42 is on the virtual line α connecting respective tip end portions of a pair of seal lips 41. Although the auxiliary lip 42 is provided to protrude from a portion between base end portions of the pair of seal lips 41, distances between the tip end portion of the auxiliary lip 42 and respective tip end portions of the seal lips 41 are changed in the extending direction of the seal lips 41 so as to form a zigzag shape. The protruding amount and the thickness of the auxiliary lip 42 are formed uniformly without being changed in the extending direction of the seal lip 41.

Accordingly, the widths of groove portions 43a and 43b between the auxiliary lip 42 and the seal lips 41 vary in the extending direction of the seal lips 41, however, dimensions of the groove portion 43a on the upstream side and the groove portion 43b on the downstream side of the auxiliary lip 42 (volumes of the groove portions 43a and 43b) are formed to be equivalent when seen as the entire seal structures 8e, 8f, 26e, 26f, 18c and 27c.

Also in the above structure, abutting conditions of respective seal lips 41 with respect to the seat portions can be equivalent by equalizing the dimensions of the groove portions 43a and 43b on both sides of the auxiliary lip 42. As the auxiliary lip 42 is provided to protrude from between base end portions of the pair of seal lips 41, flexibility as the seal structure (flexibility of the seal lips 41) can be secured.

Also in this structure, the dimensions of the groove portions 43a on the upstream side and the groove portion 43b on the downstream side of the auxiliary lip 42 continuously vary, regular vortexes are not formed in respective groove portions and vortexed between the upstream side and the downstream side of the auxiliary lip 42 can be uneven, which can suppress the generation of noise.

### [Example 3]

In an example shown in Figs. 8A to 8C, angles θ made by the auxiliary lip 42 and respective seal lips 41 are formed to be equivalent. Distances between the tip end portion of the auxiliary lip 42 and respective tip end portions of the seal lips 41 and the thickness of the auxiliary lip 42 are formed to be equivalent in the extending direction of the seal lips 41. The tip end portion of the auxiliary lip 42 is on the virtual line α connecting respective tip end portions of the pair of seal lips 41, and cutout portions 44 are formed at given intervals on an upper edge so that the protruding amount varies in the extending direction of the seal lips 41.

Also in the above structure, abutting conditions of respective seal lips 41 with respect to the seat portions can be equivalent by equalizing the dimensions of the groove portions 43a and 43b on both sides of the auxiliary lip 42. As the auxiliary lip 42 is provided to protrude from between base end portions of the pair of seal lips 41, flexibility as the seal structure (flexibility of the seal lips 41) can be secured.

In the above structure, the cutout portions 44 are formed at given intervals on the upper edge portion of the auxiliary lip 42, therefore, the air flow between the seal lips 41 can be stirred, and vortexes generated in the groove portion 43a on the upstream side and the groove portion 43b on the downstream side of the auxiliary lip 42 can be uneven, thereby suppressing the generation of noise.

### [Example 4]

An example shown in Figs. 9A to 9C is a modification example of the seal structures 18c, 27c, 8d, 8f, 26e and 26f shown in Figs. 8A to 8C, which is configured so that a length L1 of the cutout portions 44, a height H of the auxiliary lip 42 and an interval L2 between one cutout portion 44 and another cutout portion 44 are made to be different from one another at random.

Also in the above structure, the same operations and effects as Figs. 8A to 8C can be obtained. In particular, the length L1 of the cutout portions 44, the interval L2 between one cutout portion 44 and another cutout portion 44, and the height H of the auxiliary lip 42 are changed at random, thereby further stirring the air flow between the seal lips 41 and vortexes generated in the groove portion 43a on the upstream side and the groove portion 43b on the downstream side of the auxiliary lip 42 can be uneven to suppress the generation of noise.

### [Example 5]

In an example shown in Figs. 10A to 10C, the tip portions of the auxiliary lip 42 is on the virtual line α connecting respective tip end portions of the pair of seal lips 41. Angles θ made by the auxiliary lip 42 and respective seal lips 41 are formed to be equivalent, and the auxiliary lip 42 is formed so as to have thin portions and thick portions (swollen portions 51) in the extending direction. The thin portions have a dimension W1 and the thick portions have a dimension W2 which is larger than W1.

Also in the structure, abutting conditions of respective seal lips 41 with respect to the seat portion can be equivalent by equalizing the dimensions of the groove portions 43a and 43b on both sides of the auxiliary lip 42. As the auxiliary lip 42 is provided to protrude from between the base end portions of the pair of seal lips 41, flexibility as the seal structure (flexibility of the seal lip 41) can be secured.

In the above structure, respective widths of the groove portion 43a on the upstream side and the groove portion 43b on the downstream side of the auxiliary lip 42 vary in the extending direction of the seal lips 41, therefore, the generation of regular vortexes in respective groove portions 43a and 43b can be suppressed. Also, the thickness of the auxiliary lip 42 is changed in the extending direction of the seal lips 41, therefore, vortexes entering the groove portions from structures formed on the upstream side of respective groove portions 43a and 43b (the seal lip 41 provided on the upstream side of the groove portion 43a on the upstream side and the auxiliary lip 42 provided on the upstream side of the groove portion 43b on the downstream side) can be made to be different on the upstream side and the downstream side, which can allow vortexes on the upstream side and the downstream side of the auxiliary lip 42 to be uneven and suppress the generation of noise.

### [Example 6]

An example shown in Figs. 11A to 11C is a modification example of the seal structure shown in Figs. 10A to 10C, in which the width of the swollen portions 51 formed in the auxiliary lip 42 (width which is perpendicular to the extending direction of the seal lip 41) is changed in adjacent swollen portions 15, and the thickness of the auxiliary lip 42, namely, distances between the tip end portion of the auxiliary lip 42 and respective tip end portions of the seal lips 41 (widths of the groove portion 43a and 43b) are changed in the extending direction of the seal lips 41. As other structures are the same as the structures shown in Figs. 10A to 10C, explanation is omitted by adding the same symbols to the same parts.

Also in the above structure, the same operations and effects as the structure shown in Figs. 10A to 10C can be obtained and unevenness of vortexes generated in the groove portion 43a on the upstream side and the groove portion 43b on the downstream side of the auxiliary lip 42 is further promoted to thereby suppress the generation of noise.

### [Example 7]

An example shown in Figs. 12A to 12C is a modification example of the seal structure shown in Figs. 10A to 10C. In Fig. 10 A to 10C, the swollen portions 51 having a rectangular cross-section are formed in the auxiliary lip 42 at given intervals in the extending direction of the auxiliary lips 42. In this example, the swollen portions 51 are formed to be a columnar shape having a circular cross-section, and the swollen portions 51 are formed at given intervals in the extending direction of the auxiliary lip 42. Also in the structure, the same operations and effects as Figs. 10A to 10C can be obtained.

### [Example 8]

An example shown in Figs. 13A to 13C is a modification example of the seal structure shown in Figs. 12A to 12C. In the example, the swollen portions 51 provided in the auxiliary lip 42 are formed to be a frustum-shape having a circular cross-section, and the swollen portions 51 are formed at given intervals in the extending direction of the auxiliary lip 42. Also in this structure, the same operations and effects as the structure shown in Figs. 10A to 10C can be obtained. Furthermore, it is possible to obtain an advantage that the auxiliary lip 42 is easily removed from the third mold 47 when the seal lips 41 and the auxiliary lip 42 are molded by the injection molding process.

### [Example 9]

An example shown in Figs. 14A to 14C is a modification example of the seal structure shown in Figs. 12A to 12C or Figs. 13A to 13C. In the example, the swollen portions 51 provided in the auxiliary lip 42 are continuously formed in the extending direction of the auxiliary lip 42 so as to be a columnar shape or a frustum-shape having a circular cross-section. As the widths of the groove portions 43a and 43b continuously vary in the extending direction of the seal lips in such structure, the same operations and effects as the structure shown in Figs. 13A to 13C can be obtained.

### [Example 10]

An example shown Fig. 15 is a modification example of the seal structure shown in Figs. 14A to 14C. The example is the same as the structure of Figs. 14A to 14C in a point that the swollen portions 51 provided in the auxiliary lip 42 are continuously formed in the extending direction of the auxiliary lip 42, however, a length L3 of the swollen portions 51 formed in the auxiliary lip 42 and a width W3 from the center of the auxiliary lip are changed at random. Also in the structure, the same operations and effects as the structure shown in Figs. 10A to 10C can be obtained as the widths of the groove portions 43a and 43b continuously vary in the extending direction of the seal lips 41.

### [Third Embodiment]

In Fig. 16A to 16C to Fig. 22A to 22C, a third embodiment of the seal structure is shown. In this embodiment, seal structures 8e, 8f, 26e, 26f, 18c and 27c are formed only by a pair of seal lips 41 provided along the axial direction or the radial direction of the rotary shaft and protruding toward the outside of the door body, which is elastically deformed by being pressed onto the seat portions. The respective seal lips 41 are united in base end portions 41b, which are formed almost symmetrically so as to be inclined at a given angle with respect to a flat plane including the base end portions and the rotary shaft. The thickness of respective seal lips 41 is changed in the extending direction of the seal lips 41.

### [Example 11]

In an example shown in Figs. 16A to 16C, ridges 52 having a given width and extending from the tip end portion 41a toward the base end portion 41b are formed in places where the pair of seal lips 41 are opposed to each other at given intervals, thereby changing the thickness of the seal lips 41 in the extending direction. In particular, the ridges 52 of respective seal lips 41 are formed so as to be opposed to one another in the example, and respective ridges 52 are formed so that a protruding amount is gradually reduced from the tip end portion 41a to the base end portion 41b of the seal lip 41 and the protruding amount is reduced to zero in the base end portions.

The above seal lips 41 and the ridges 52 are integrally formed by an elastic member. When the plate-shaped cantilever door is cited as an example, as shown in Figs. 17A to 17C, the first mold 45 and the second mold 46 are attached to the door bodies 18b, 27b shown in Fig. 17A so as to sandwich the door bodies from both sides, the third mold 47 shaping the seal lips and the ridges together with the first and second molds is combined to the first mold 45 and the second mold 46 from the tip end side of the door bodies, and the melted elastic member is poured to the space 48 formed between these molds, then, the molds are removed after cooling, thereby uniting the door bodies 18b, 27b with the seal lips 41 and the ridges 52 (the same applies to the following examples).

As the seal structure is formed only by the pair of seal lips 41 (the auxiliary lip is omitted) in the case where such seal structure is used, abutting conditions of respective seal lips 41 with respect to the seat portions can be equivalent and flexibility as the seal structure (flexibility of the seal lip 41) can be secured.

Furthermore, as the ridges 52 are formed at given intervals in the extending direction of the seal lips 41, the thickness of the seal lips 41 can be changed in the extending direction and shapes of vortexes in a groove portion 43 between the seal lips 41 can be uneven in the extending direction of the seal lips 41 to thereby suppress the generation of noise. The width of the groove portion 43 between the pair of seal lips is fixed when the thickness of the seal lips 41 is uniform in the extending direction, therefore, vortexes generated in the groove portion 43 in the extending direction of the seal lips 41 are not inhibited and can be grown enough to generate noise. When the width of the groove portion 43 is changed in the extending direction of the seal lips 41, the generation of vortexes having the uniform shape is suppressed, and the generation of noise is reduced.

### [Example 12]

An example shown in Fig. 18 is a modification example of the seal structure shown in Figs. 16A to 16C. In the example shown in Figs. 16A to 16C, the ridges 52 having the given width are formed at given intervals in the extending direction of the seal lips 41 for changing the thickness of the seal lips 41 in the extending direction. In this example, length (L1 to L4) of ridges 52 in the extending direction of the seal lips and protruding amounts (P1, P2) of the ridges 52 in the thickness direction are changed to thereby change the thickness of the seal lips 41 in the extending direction.

Also in the above structure, abutting conditions of respective seal lips 41 with respect to the seat portions can be equivalent and flexibility as the seal structure (flexibility of the seal lips 41) can be secured, therefore, the shape of vortexes generated in the groove portion 43 can be uneven in the extending direction of the seal lips 41 and the generation of noise can be reduced.

### [Example 13]

An example shown in Figs. 19A to 19C is a modification example of the seal structure shown in Figs. 16A to 16C. In the example shown in Figs. 16 A to 16C, the ridges 52 having the given width are formed at given intervals in the extending direction of the seal lips 41 for changing the thickness of the seal lips 41 in the extending direction. In this example, ridges 52 are formed by curved surfaces swelling continuously along the extending direction of the seal lips 41, and ridges 52 adjacent to each other in the extending direction of the seal lips 41 are connected, thereby changing the thickness of the seal lips 41 continuously.

In the above example, the ridges 52 of respective seal lips 41 are formed so that the protruding amount is gradually reduced from the tip end portion 41a to the base end portion 41b and the protruding amount is reduced to zero in the base end portion 41b. The ridges 52 of respective seal lips 41 are formed so as to correspond to valley portions 53 between ridges of the opposed seal lip 41, which is different from the structure of Figs. 16A to 16C. That is, in this example, the groove width between the seal lips (a cross-sectional area between seal lips) is fixed in the extending direction of the seal lips, however, the groove portion 43 is forms so as to meander in the extending direction of the seal lips 41.

Also in the above structure, abutting conditions of respective seal lips 41 with respect to the seat portions can be equivalent and flexibility as the seal structure (flexibility of the seal lips 41) can be secured, therefore, the shape of vortexes generated in the groove portion 43 can be uneven in the extending direction of the seal lips 41 and the generation of noise can be reduced in the same manner as the structure shown in Figs. 16A to 16C. The ridges 52 of the seal lips 41 are formed so as to correspond to the valley portions 53 between the ridges in the opposed seal lips 41, therefore, a pair of seal lips 41 abut on each other without a gap when the seal lips 41 are pressed onto the seal portions 6a, 6b, 7a, 7b, 21a, 23a, 23b, 25a, 25b, 32a, 32b and 33a, which positively prevents unintended generation of vortexes.

### [Example 14]

An example shown in Fig. 20 is a modification example of the seal structure shown in Figs. 19A to 19C. In the example of Figs. 19 A to 19C, the ridges 52 are formed by curved surfaces swelling continuously along the extending direction of the seal lips 4 and are formed at given intervals in the extending direction of the seal lips 41 for changing the thickness of the seal lips 41 in the extending direction. In this example, ridges 52 in which lengths L5 and L6 are changed irregularly in the extending direction of the seal lip are provided in one seal lip 41, and valley portions 53 corresponding to the shape of the ridges are provided so as to oppose to the ridges 52 in the other seal lip 41, thereby changing thicknesses of respective seal lips 41 irregularly in the extending direction.

Also in the above structure, the same operations and effects as the structure example shown in Figs. 19A to 19C can be obtained, and particularly, the thickness of the seal lips varies irregularly in this example, therefore, the shape of vortexes generated in the groove portion 43 can be further uneven in the extending direction of the seal lips 41 and the generation of noise can be reduced.

### [Example 15]

In an example shown in Figs. 21A to 21C, ridges 54 are provided only in tip end portions 41a of the seal lips 41 for changing the thickness of the seal lips 41 in the extending direction. In this example, the ridges 54 are formed to have a rectangular shape in cross section along the extending direction of the seal lips 41 regularly so that the ridges 54 of the pair of seal lips 41 are formed so as to oppose to each other.

Also in the above structure, abutting conditions of respective seal lips 41 with respect to the seat portions can be equivalent and flexibility as the seal structure (flexibility of the seal lips 41) can be secured, and the thickness of the tip end portions of the seal lips 41 is changed in the extending direction of the seal lips 41, therefore, the shape of vortexes generated in the groove portion 43 can be further uneven in the extending direction of the seal lips 41 and the generation of noise can be reduced.

### [Example 16]

An example shown Figs. 22A to 22C is a modification example of the seal structure (Example 14) shown in Figs. 21A to 21C. In the example of Figs. 21 A to 21C, the ridges 54 having a rectangular cross section are formed in the tip end portions 41a of the seal lips 41 at given intervals in the extending direction of the seal lips for changing the thickness of the seal lips in the extending direction. In this example, the ridges 54 formed in the tip end portions 41a of the seal lips 41 are configured by curved surfaces swelling continuously along the extending direction of the seal lips and the ridges 54 adjacent to one another in the extending direction of the seal lips 41 are connected to thereby change the thickness of the seal lips 41 continuously. The ridges 54 of respective seal lips 41 are formed so as to correspond to valley portions 55 formed between the ridges 54 of the opposed seal lips 41, which differs from Figs. 21A to 21C.

Also in the above structure, abutting conditions of respective seal lips 41 with respect to the seat portions can be equivalent and flexibility as the seal structure (flexibility of the seal lips 41) can be secured, therefore, the shape of vortexes generated in the groove portion 43 can be uneven in the extending direction of the seal lips 41 and the generation of noise can be reduced.

The above structures can be used by being combined suitably according to need. The examples in which the present invention is applied to the rotary door and the plate-shaped cantilever door as doors have been explained, however, the present invention can be also applied to a plate-shaped butterfly door having a rotary shaft at the center or other doors.

### Description of Reference Numerals and Signs

5 intake case
6a, 6b, 7a, 7b, 21a, 23a, 23b, 25a, 25b, 32a, 32b, 33a seat portion
8 intake door
8d, 18b, 26d, 27b door body
8e, 8f, 18c, 27c, 26e, 26f seal structure
12 air conditioning case
18 air mix door
26 first mode door
27 second mode door
41 seal lip
42 auxiliary lip
43, 43a, 43b groove portion

## Claims

1. A door for an air conditioner (8, 18, 26, 27) arranged in a case (5, 12) provided with an air passage in which air is circulated, which changes the air flow in the case or opens/closes an opening formed in the case, comprising:
a door body (8d, 18b, 26d, 27b) rotating around a rotary shaft; and
a seal structure (8e, 8f, 18c, 27c, 26e, 26f) provided in a portion corresponding to a seat portion (6a, 6b, 7a, 7b, 21a, 23a, 23b, 25a, 25b, 32a, 32b, 33a) formed in the case around the door body and pressed onto the seat portion to thereby block between the door body and the seat portion,
wherein the seal structure includes
a pair of seal lips (41) provided along an axial direction or a radial direction of the rotary shaft and protruding toward the outside of the door body, which is elastically deformed by being pressed onto the seat portions, and
an auxiliary lip (42) provided between the pair of seal lips and protruding toward the outside of the door body,
the auxiliary lip is formed so that a tip end portion thereof is in a position apart from the door body farther than a virtual line (α) connecting respective tip end portions of the pair of seal lips and angles (θ) made by the auxiliary lip and respective seal lips are equivalent, and
a protruding amount of the auxiliary lip is set so that the auxiliary lip does not contact an inner wall of the case.

2. The door for the air conditioner according to claim 1,
wherein the protruding amount of the auxiliary lip is set so that the tip end portion of the auxiliary lip is apart from the inner wall of the case with an approximately fixed gap (G).

3. A door for an air conditioner (8, 18, 26, 27) arranged in a case (5, 12) provided with an air passage in which air is circulated, which changes the air flow in the case or opens/closes an opening formed in the case, comprising:
a door body (8d, 18b, 26d, 27b) rotating around a rotary shaft; and
a seal structure (8e, 8f, 18c, 27c, 26e, 26f) provided in a portion corresponding to a seat portion (6a, 6b, 7a, 7b, 21a, 23a, 23b, 25a, 25b, 32a, 32b, 33a) formed in the case around the door body and pressed onto the seat portion to thereby block between the door body and the seat portion,
wherein the seal structure includes
a pair of seal lips (41) provided along an axial direction or a radial direction of the rotary shaft and protruding toward the outside of the door body, which is elastically deformed by being pressed onto the seat portions, and
an auxiliary lip (42) provided between the pair of seal lips and protruding toward the outside of the door body,
the auxiliary lip is formed so that a tip end portion thereof is on a virtual line (α) connecting respective tip end portions of the pair of seal lips or in a position closer to the door body than the virtual line, and
dimensions of groove portions (43, 43a, 43b) formed between the auxiliary lip and respective seal lips are made to be equivalent.

4. The door for the air conditioner according to claim 3,
wherein angles (θ) made by the auxiliary lip and the respective seal lips are made to be equivalent.

5. The door for the air conditioner according to claim 3,
wherein distances between the tip end portion of the auxiliary lip and the respective tip end portions of the seal lips are changed in an extending direction of the seal lip.

6. The door for the air conditioner according to claim 3 or 4,
wherein the protruding amount of the auxiliary lip is changed in the extending direction of the seal lips.

7. The door for the air conditioner according to any one of claims 3 to 6,
wherein the thickness of the auxiliary lip is changed in the extending direction of the seal lips.

8. A door for an air conditioner (8, 18, 26, 27) arranged in a case (5, 12) provided with an air passage in which air is circulated, which changes the air flow in the case or opens/closes an opening formed in the case, comprising:
a door body (8d, 18b, 26d, 27b) rotating around a rotary shaft; and
a seal structure (8e, 8f, 18c, 27c, 26e, 26f) provided in a portion corresponding to a seat portion (6a, 6b, 7a, 7b, 21a, 23a, 23b, 25a, 25b, 32a, 32b, 33a) formed in the case around the door body and pressed onto the seat portion to thereby block between the door body and the seat portion,
wherein the seal structure includes
a pair of seal lips (41) provided along an axial direction or a radial direction of the rotary shaft and protruding toward the outside of the door body, which is elastically deformed by being pressed onto the seat portions, and
the thickness of the seal lips is changed in the extending direction of the seal lips.

9. The door for the air conditioner according to claim 8,
wherein a cross-sectional area of the groove portion (43, 43a, 43b) formed between the pair of seal lips is changed in the extending direction of the seal lips.
